(19) Europäisches Patentamt
European Patent Office
Office européen des brevets

(11) **EP 2 865 070 B1**

(12) **FASCICULE DE BREVET EUROPEEN**

(45) Date de publication et mention
de la délivrance du brevet:
**13.09.2017 Bulletin 2017/37**

(21) Numéro de dépôt: **13733383.7**

(22) Date de dépôt: **11.06.2013**

(51) Int Cl.:
*H02J 7/02* (2016.01)     *B60L 11/18* (2006.01)

(86) Numéro de dépôt international:
**PCT/FR2013/051343**

(87) Numéro de publication internationale:
**WO 2014/001676 (03.01.2014 Gazette 2014/01)**

(54) **PROCEDE DE COMMANDE D'UN CHARGEUR DE BATTERIE AUTOMOBILE A REDUCTION DE PERTES PAR COMMUTATION**

VERFAHREN ZUR STEUERUNG EINES LADEGERÄTS FÜR EINE KRAFTFAHRZEUGBATTERIE MIT REDUZIERUNG DER VERLUSTE AUFGRUND DER UMSCHALTENS

METHOD FOR CONTROLLING A CHARGER FOR A MOTOR VEHICLE BATTERY WITH A REDUCTION OF LOSSES DUE TO SWITCHING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.06.2012 FR 1256026**

(43) Date de publication de la demande:
**29.04.2015 Bulletin 2015/18**

(73) Titulaire: **Renault S.A.S.**
**92100 Boulogne-Billancourt (FR)**

(72) Inventeurs:
• **KVIESKA, Pedro**
**F-78000 Versailles (FR)**
• **MERIENNE, Ludovic**
**F-91190 Gif Sur Yvette (FR)**

(56) Documents cités:
**FR-A1- 2 943 188**     **FR-A1- 2 964 510**

• **JOERG DANNEHL ET AL: "Limitations of Voltage-Oriented PI Current Control of Grid-Connected PWM Rectifiers With Filters", IEEE TRANSACTIONS ON INDUSTRIAL ELECTRONICS, IEEE SERVICE CENTER, PISCATAWAY, NJ, USA, vol. 56, no. 2, 1 février 2009 (2009-02-01), pages 380-388, XP011237609, ISSN: 0278-0046, DOI: 10.1109/TIE.2008.2008774**

**Description**

L'invention a pour domaine technique la commande de chargeurs à forte puissance, et plus particulièrement, la réduction des pertes de chargeurs à forte puissance.

Les chargeurs de batterie actuels sont fonctionnels à forte puissance, par exemple 43kW et présentent des rendements élevés. Toutefois, à ces puissances, une variation de rendement de 1% représente un écart de puissance consommée de 400W. Par ailleurs, un bon rendement (par exemple 90%) représente 4kW de chaleur à dissiper.

Un tel chargeur pour véhicule électrique, utilisant un réseau d'alimentation triphasé, est décrit dans la demande de brevet FR2964510. Dans cette demande, les pertes dans le circuit de l'inductance additionnelle et dans la machine électrique sont proportionnelles au courant qui y circule. Pour diverses raisons, la consigne du courant neutre doit être à tout instant supérieure aux courants d'entrée et au courant de batterie. A cause des bruits et des incertitudes de modèle, une marge est nécessaire entre la consigne de courant neutre et ces deux autres courants pour assurer la relation citée précédemment. Pour charger à 43kW une batterie à 300V, le courant de batterie doit être de 143 A. La génération actuelle de véhicules comprend des chargeurs dans lesquels la consigne de courant neutre est égale à 175A.

Il apparaît ainsi qu'il existe un besoin pour une augmentation du rendement et une réduction de la chaleur à dissiper.

Un but de la présente demande de brevet est un procédé de commande d'un chargeur de batterie permettant que le courant neutre soit égal au courant batterie et le plus faible possible.

Actuellement, ce problème est résolu par une réduction de la consigne de courant neutre. Plus le courant neutre est bas, meilleur est le rendement du chargeur. Par contre plus le courant neutre est haut, meilleure est la régulation du courant de charge. Un compromis doit donc être trouvé. A cause de ce compromis, la résolution du problème par les moyens actuellement disponibles limite le courant de neutre en dessous duquel il est possible de descendre. La limite du courant de neutre est égale à 175A.

De l'état de la technique, on connait les documents suivants.

Le document FR2943188 divulgue l'architecture d'un chargeur pour réseau monophasé ou triphasé ainsi que son principe de commande général.

Le document US2006209574 divulgue une alimentation électrique qui comprend un redresseur à diode et une capacité pour obtenir une tension constante suivie d'un auto-transformateur pour régler le niveau de tension en sortie.

Le document WO2011115330 divulgue un régulateur automatique de tension qui utilise un transformateur et règle le niveau de tension rapidement en modifiant le nombre de spires de l'enroulement secondaire.

Un objet de l'invention est un procédé de commande d'un chargeur de batterie pour véhicule automobile, le chargeur de batterie comprenant un filtre d'entrée reliant un circuit d'alimentation triphasé à un hacheur série, un circuit de boost étant relié d'une part au hacheur série et d'autre part à la batterie. Le procédé comprend les étapes suivantes :

on détermine la tension de seuil en sortie du hacheur série en fonction de la différence entre une mesure de courant de batterie et une requête de courant de batterie,
on maintient constante la tension en sortie du hacheur série, et
on commande les interrupteurs de l'étage de boost de sorte qu'ils soient maintenus ouverts.

Le hacheur série peut comprendre trois phases, une phase haute dont la tension est la plus grande des trois phases, une phase basse dont la tension est la plus faible des trois phases, et une phase intermédiaire.

On peut alors maintenir constante la tension en sortie du hacheur série en réalisant les étapes suivantes :

on commande la fermeture des interrupteurs haut et bas de la phase intermédiaire du hacheur série, si la tension de seuil en sortie du hacheur série est inférieure à la tension de la phase basse, on commande le hachage de l'interrupteur haut de la phase basse avec un premier rapport cyclique, sinon, on ferme l'interrupteur haut de la phase basse et on commande le hachage de l'interrupteur bas de la phase haute avec un deuxième rapport cyclique.

La consigne de courant en sortie du hacheur série peut être toujours supérieure aux courants provenant du réseau d'alimentation triphasé et au courant de batterie.

D'autres buts, caractéristiques et avantages apparaîtront à la lecture de la description suivante donnée uniquement en tant qu'exemple non limitatif et faite en référence en référence aux figures annexées sur lesquelles :

- la figure 1 illustre un chargeur commandé par le procédé de commande selon l'invention,
- la figure 2 illustre de façon simplifiée, les principaux éléments du circuit de boost d'un tel chargeur,
- la figure 3 illustre plus en détail le circuit de buck d'un chargeur commandé par le procédé de commande selon l'invention, et
- la figure 4 illustre un régulateur intégrateur d'un système de commande selon l'invention.

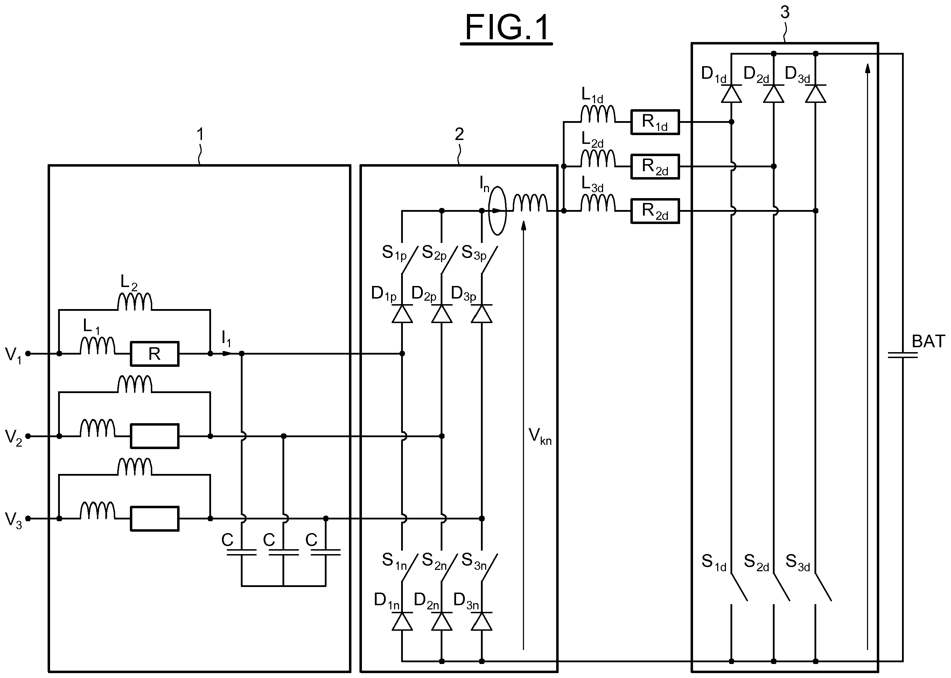

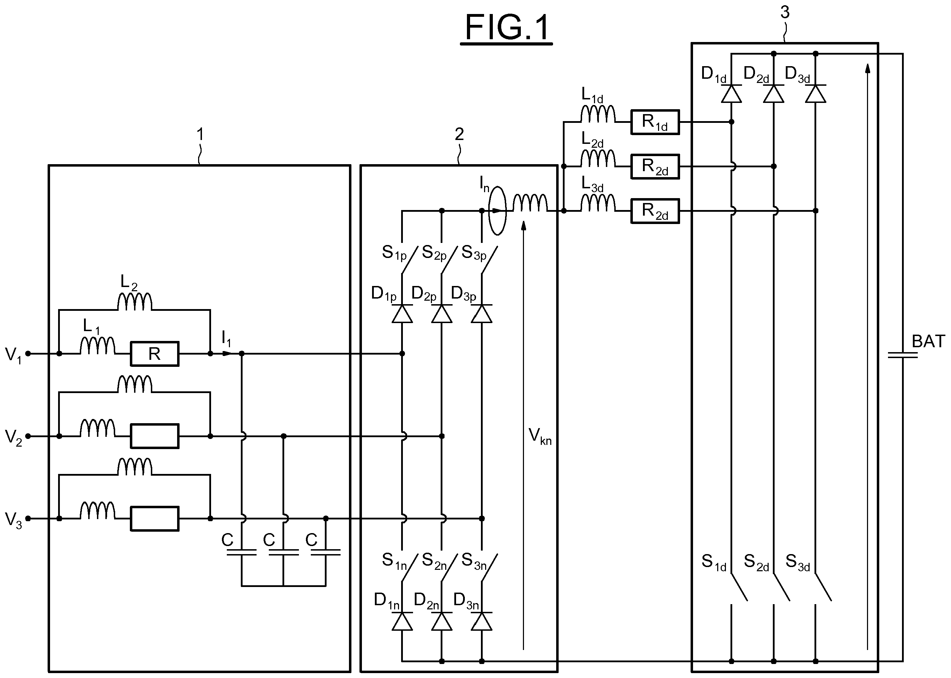

La figure 1 illustre un chargeur commandé par le procédé de commande selon l'invention. On peut voir un filtre d'entrée 1 reliant le chargeur au circuit triphasé, le filtre d'entrée 1 étant relié à l'entrée d'un circuit de buck 2 délivrant en sortie une tension $V_{kn}$ et un courant $I_n$. Le filtre d'entrée peut comprendre pour chaque phase d'alimentation du réseau d'alimentation électrique, un circuit d'amortissement comprenant une résistance R en série avec une impédance $L_1$, l'ensemble étant relié en parallèle avec une impédance $L_2$. Chacun de ces circuits d'amortissement permet de filtrer le courant circulant dans le système, par exemple le circuit d'amortissement ($L_1$,$L_2$,R) permet de filtrer le courant I provenant de la phase $V_1$ du réseau d'alimentation électrique. Par ailleurs, la sortie de chacun des circuits d'amortissement est reliée à une première armature d'un condensateur C, les deuxièmes armatures étant reliées entre elles, et éventuellement à la masse, afin de filtrer les composantes de mode commun. Le circuit de buck 2, également appelé hacheur série, est un circuit réducteur de tension. Le circuit de buck 2 et le filtre d'entrée 1 sont compris dans un élément désigné boite de jonction. Le circuit de buck 2 est relié en sortie à l'entrée d'un circuit de boost 3 par l'intermédiaire de trois connexions parallèles comprenant chacune une inductance en série avec une résistance. Le circuit de boost 3, également appelé hacheur parallèle, est un circuit élévateur de tension. Chacune de ces connexions parallèles est connectée à un bras du circuit de boost 3. Le circuit de boost 3 est relié à la batterie BAT.

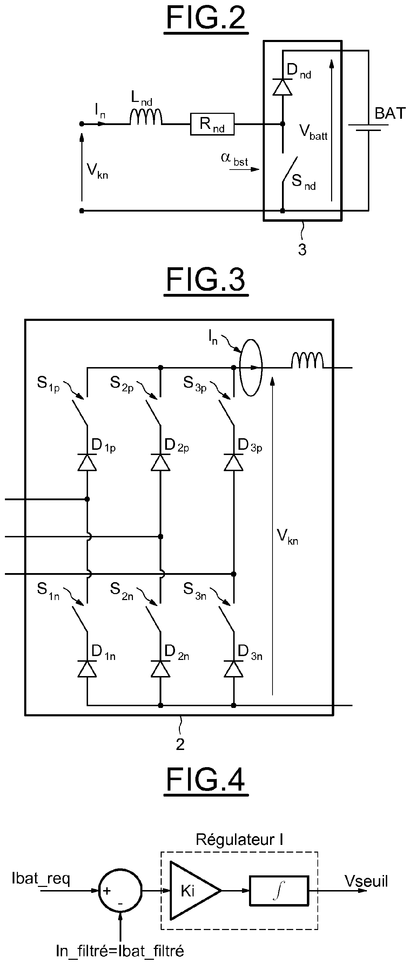

La figure 2 illustre de façon simplifiée, les principaux éléments d'un bras n du circuit de boost d'un tel chargeur, n variant de 1 à 3 pour le circuit de boost présent dans la figure 1, chaque bras comportant une diode $D_{nd}$ et un interrupteur $S_{nd}$.

La tension $V_{kn}$ et le courant $I_n$ issus du circuit de buck 2 sont appliqués entre la masse et un point d'où partent les trois connexions parallèles comportant en série une inductance $L_{nd}$ et une résistance $R_{nd}$. La résistance $R_{nd}$ est reliée d'une part à une anode de la diode $D_{nd}$, et à l'interrupteur $S_{nd}$. L'autre borne de l'interrupteur $S_{nd}$ est connectée à la masse. La cathode de la diode $D_{nd}$ est reliée à une batterie BAT, reliée elle-même par ailleurs à la masse. Une inductance additionnelle intermédiaire est disposée entre la connexion commune aux interrupteurs ($S_{1p}$,$S_{2p}$,$S_{3p}$) et le point d'où partent les trois connexions parallèles comportant en série une inductance $L_{nd}$ et une résistance $R_{nd}$. Cette inductance additionnelle intermédiaire permet de disposer d'une plus grande liberté de dimensionnement des bobinages de la machine électrique vis-à-vis du chargeur.

L'équation dynamique qui régit un tel bras est la suivante :

$$\left( L\ s + R \right)\cdot I_n = V_{kn} - \alpha_{bst} \cdot V_{batt} \qquad (Eq.\ 1)$$

Avec :

L : valeur de l'impédance $L_{nd}$
R : valeur de la résistance $R_{nd}$
$I_n$ : courant de sortie du circuit de buck
$V_{kn}$ : tension de sortie du circuit de buck
$V_{batt}$ : tension de charge de la batterie
$\alpha_{bst}$ : le rapport cyclique de commande de l'interrupteur $S_{nd}$, et
s : l'opérateur de Laplace.

Par interrupteur, on entend tout moyen de commutation apte à interrompre la circulation du courant. Un tel moyen englobe notamment les transistors, et notamment les transistors bipolaires à grille isolée (acronyme anglais, IGBT).

Ainsi, pour un circuit de boost à trois bras, tel qu'il est illustré sur la figure 1, on dispose de trois bras recevant chacun le courant $I_n$ et la tension $V_{kn}$ et reliés tous les trois en parallèle à la batterie BAT. Un premier bras comprend une inductance $L_{1d}$, une résistance $R_{1d}$, une diode $D_{1d}$ et un interrupteur $S_{1d}$. Un second bras comprend une inductance $L_{2d}$, une résistance $R_{2d}$, une diode $D_{2d}$ et un interrupteur $S_{2d}$. Un troisième bras comprend une inductance $L_{3d}$, une résistance $R_{3d}$, une diode $D_{3d}$ et un interrupteur $S_{3d}$.

Dans le cas d'un circuit de boost 3 à trois bras, l'application de l'équation 1 est simplifiée par rapport au cas réel en considérant que les trois interrupteurs ($S_{1d}$, $S_{2d}$, $S_{3d}$) du circuit de boost sont commandés de la même façon. On pose que si un rapport cyclique $\alpha_{bst} = 1$ est employé, l'interrupteur correspondant est ouvert.

Dans le formalisme simplifié de l'équation 1, lorsque les interrupteurs sont ouverts, le circuit de boost est ouvert, ce qui implique que la batterie est connectée au circuit de buck.

Lorsque le circuit de boost est fermé, il isole la batterie des courants de charge. Le courant qui ira à la batterie est donc modulé de la façon suivante :

$$I_{batt} = \alpha_{bst} * I_n \qquad\qquad (Eq.\ 2)$$

Pour optimiser le rendement, le courant In doit être le plus bas possible. La valeur de $\alpha_{bst}$ doit donc être tout le temps égale à 1.

Par ailleurs, le courant de la phase neutre doit être maintenu constant au travers de la variable $\alpha_{bst}$. Comme nous supposons cette valeur désormais bloquée, seul le contrôle de la tension $V_{kn}$ Peut permettre de maintenir constant le courant de neutre.

Ainsi, pour que le courant neutre soit constant, il faut donc que la tension $V_{kn}$ soit constante. On doit donc commander le circuit de buck de telle façon que la tension en sortie soit constante en moyenne.

La figure 3 illustre plus en détail le circuit de buck.

Le circuit de buck comprend trois connexions entrantes parallèles portant chacune une phase du réseau d'alimentation électrique et reliée chacune à une paire d'interrupteurs formant un bras du circuit de buck.

La première connexion est connectée entre un premier interrupteur H référencé $S_{1N}$ et un deuxième interrupteur B référencé $S_{1P}$ d'un premier bras du circuit de buck.

La deuxième connexion est connectée entre un premier interrupteur H référencé $S_{2N}$ et un deuxième interrupteur B référencé $S_{2P}$ d'un deuxième bras du circuit de buck.

La troisième connexion est connectée entre un premier interrupteur H référencé $S_{3N}$ et un deuxième interrupteur B référencé $S_{3P}$ d'un troisième bras du circuit de buck.

Les interrupteurs H sont également nommés interrupteurs hauts et les interrupteurs B, interrupteurs bas.

Les premiers interrupteurs ($S_{1N}$, $S_{2N}$, $S_{3N}$) de chaque phase du circuit de buck sont par ailleurs connectés chacun à l'anode d'une première diode ($D_{1N}$, $D_{2N}$, $D_{3N}$) et à la cathode d'une deuxième diode ($D_{1P}$, $D_{2P}$, $D_{3P}$). Les cathodes des premières diodes ($D_{1N}$, $D_{2N}$, $D_{3N}$) sont reliées ensembles à une première sortie du circuit de buck.

Les deuxièmes interrupteurs ($S_{1P}$, $S_{2P}$, $S_{3P}$) de chaque phase du circuit de buck sont par ailleurs connectés chacun à l'anode d'une deuxième diode ($D_{1P}$, $D_{2P}$, $D_{3P}$) par un de leurs pôles, et sont reliés ensembles par leur autre pôle à une seconde sortie du circuit de buck. Une impédance est disposée en série avec la seconde sortie du circuit de buck.

Les tensions sinusoïdales du réseau triphasé en entrée du circuit de buck sont hachées par les interrupteurs en une tension $V_{kn}$. La tension $V_{kn}$ ainsi créée présente des variations brutales dues au principe même du hachage. Lorsqu'il est considéré dans son intégralité, le système présente une inertie liée aux capacités et inductances. Cette inertie agit comme un filtre ne laissant subsister que les basses fréquences. Par basses fréquences, on entend les fréquences inférieures à 500Hz. C'est la valeur moyenne de cette tension filtrée qui permet de commander le courant. Dans la suite, toute grandeur ne variant pas ou seulement à des fréquences inférieures à 500Hz sera considérée comme une constante.

La tension maximale du circuit de buck est obtenue en le faisant fonctionner en pont redresseur, c'est-à-dire avec tous les interrupteurs fermés. On aura alors une tension $V_{kn}$ redressée qui est en permanence supérieure à une fois et demi l'amplitude des tensions des trois phases d'entrée. On en déduit donc qu'avec une commande adaptée, il est possible d'avoir une tension $V_{kn}$ constante pouvant aller jusqu'à 1.5 fois l'amplitude de la tension d'entrée.

Pour réussir à contrôler la tension $V_{kn}$, il est nécessaire de disposer de la mesure de l'angle électrique $\theta_{elec}$ du réseau. Les tensions du réseau triphasé ($V_1$,$V_2$,$V_3$) évoluent de la façon suivante :

$$\begin{cases} V_1 = A \cdot \sin(\omega \cdot t) \\ V_2 = A \cdot \sin\left(\omega \cdot t - \dfrac{2\pi}{3}\right) \\ V_3 = A \cdot \sin\left(\omega \cdot t + \dfrac{2\pi}{3}\right) \end{cases} \qquad (Eq.\ 3)$$

Où :

A est l'amplitude de la tension du réseau
$\omega$ est la fréquence du réseau

On appelle angle électrique, noté $\theta_{elec}$, la valeur du produit $\omega$.t à chaque instant t. A partir de cette valeur, on peut donc connaître la valeur des tensions de chaque phase.

Les conventions suivantes vont être employées par la suite afin de classer les phases du circuit de buck 2.

On appellera phase haute, la phase dont la tension est la plus grande.

On appellera phase basse, la phase dont la tension est la plus basse.

On appellera phase intermédiaire, la phase dont la tension se situe entre les deux autres.

En fonction de l'angle électrique $\theta_{elec}$, on voit donc qu'il y a six cadrans de fonctionnement différents, avec chacun leurs phases haute, intermédiaire et basse.

A tout moment, on utilisera la phase intermédiaire comme circuit de roue libre. Pour cela, on fermera les interrupteurs bas B et les interrupteurs hauts H correspondant à cette phase. Ceci présente le double intérêt d'offrir un chemin pour le courant indépendant du comportement des bras haut et bas et de ne pas limiter les tensions $V_{kn}$ applicables.

Ainsi, le circuit de buck est protégé de la destruction car le courant généré dispose à tout moment d'un chemin de retour. De plus, on peut obtenir à tout moment la tension $V_{kn}$ maximale en fermant l'interrupteur haut H de la phase basse et l'interrupteur bas B de la phase haute.

A partir de la valeur $\theta_{elec}$, on connaît les écarts de tension entre phase haute et phase intermédiaire ainsi qu'entre phase intermédiaire et phase basse, on appellera respectivement ces deux écarts de tensions $V_{haut}$ et $V_{bas}$ :

$$V_{haut} = V_{ph\_haut} - V_{ph\_int} \qquad (Eq.\ 4)$$

$$V_{bas} = V_{ph\_int} - V_{ph\_bas} \qquad (Eq.\ 5)$$

Avec

$V_{ph\_haut}$ la tension de phase haute,
$V_{ph\_int}$ la tension de phase intermédiaire, et
$V_{ph\_bas}$ la tension de phase basse.

Par ailleurs, on pose qu'à tout instant, ces deux tensions $V_{haut}$ et $V_{bas}$ sont positives.

De plus, si du courant circule à chaque instant, une diode de l'onduleur doit être passante. La tension $V_{kn}$ est définie par l'état de l'interrupteur haut H de la phase basse et l'état de l'interrupteur bas B de la phase haute.

Si ces deux interrupteurs sont ouverts, on a $V_{kn} = 0$. Le courant passe par le circuit de roue libre.

Si l'interrupteur haut H de la phase basse est fermé, alors que l'interrupteur bas B de la phase haute est ouvert, on a $V_{kn} = V_{bas}$. Le courant revient par cet interrupteur haut H car la tension y est inférieure.

Si l'interrupteur bas B de la phase haute est fermé, alors que l'interrupteur haut H de la phase basse est ouvert, on a $V_{kn} = V_{haut}$. Le courant arrive par cet interrupteur bas B car la tension y est supérieure.

Si les deux interrupteurs sont fermés, on a $V_{kn} = V_{haut} + V_{bas}$. Le courant arrive par la phase haute et revient par la phase basse.

Pour avoir le moins de pertes possibles, il faut hacher un minimum afin de diminuer les pertes par commutation. Ainsi, pour chaque cadran, on définit une phase prioritaire, par exemple la phase basse.

Si la tension $V_{kn}$ que l'on désire réaliser est inférieure à la tension $V_{bas}$ alors on emploie l'interrupteur haut H de la phase basse pour hacher la tension selon un premier rapport cyclique $\alpha_{bas}$ (0 pour toujours ouvert et 1 pour toujours fermé). On aura :

$$V_{kn} = \alpha_{bas}.V_{bas} \qquad (Eq.\ 6)$$

En jouant sur le rapport cyclique $\alpha_{bas}$, on pourra avoir la tension $V_{kn}$ désirée.

Si la tension $V_{kn}$ que l'on désire réaliser est supérieure à la tension $V_{bas}$ alors on va fermer l'interrupteur haut H de la phase basse et employer l'interrupteur bas B de la phase haute pour hacher la tension selon un deuxième rapport cyclique $\alpha_{haut}$. On aura alors :

$$V_{kn} = V_{bas} + \alpha_{haut}.V_{haut} \qquad (Eq.\ 7)$$

On peut réguler une tension constante jusqu'à 1.5* A.

On voit donc qu'à tout instant, un seul interrupteur au maximum est en train de hacher et on obtient bien une tension constante en sortant du circuit de buck 2.

On peut donc réguler le courant allant dans la batterie en modifiant la tension sortant du circuit de buck. La batterie étant à 300V, il faut régler un seuil de tension légèrement supérieur pour la charger.

Pour cela, on détermine la tension de seuil nécessaire pour charger la batterie par régulation intégrale en fonction de la différence entre la requête de courant de batterie Ibat_req et le courant de batterie filtré. En fonction de la tension de seuil déterminée, les rapports cycliques sont déterminés en fonction des cas exposés ci-avant.

Alternativement, le procédé peut également déterminer les commandes de rapport cyclique des interrupteurs de l'étage de buck permettant d'obtenir ce seuil de courant.

La figure 4 illustre les principaux éléments d'un régulateur intégrateur 4 compris dans un système de commande exécutant le procédé décrit ci-dessus. Le régulateur intégrateur 4 permet de déterminer les commandes de rapport cyclique correspondant au seuil de tension sortant du circuit de buck. Dans le cas présent, le courant neutre filtré est égal à une mesure du courant de batterie, étant donné que le circuit de boost est toujours ouvert.

Le régulateur intégrateur 4 détermine une consigne de tension de seuil qui est émise à destination du moyen de commande du circuit de buck, qui détermine alors des rapports cycliques fonction de ce seuil de tension.

Le procédé de commande du chargeur de batterie permet ainsi de limiter les pertes électriques par commutation.

## Revendications

1. Procédé de commande d'un chargeur de batterie pour véhicule automobile, le chargeur de batterie comprenant un filtre d'entrée (1) reliant un circuit d'alimentation triphasé à un hacheur série (2), un circuit de boost (3) étant relié d'une part au hacheur série (2) et d'autre part à la batterie (BAT), le hacheur série (2) comprenant trois phases, une phase haute dont la tension est la plus grande des trois phases, une phase basse dont la tension est la plus faible des trois phases, et une phase intermédiaire, **caractérisé par le fait qu'**il comprend les étapes suivantes :

   on détermine la tension de seuil en sortie du hacheur série (2) en fonction de la différence entre une mesure de courant de batterie et une requête de courant de batterie,
   on maintient constante la tension en sortie du hacheur série (2), et
   on commande les interrupteurs de l'étage de boost (3) de sorte qu'ils soient maintenus ouverts,
   la tension en sortie du hacheur série (2) étant maintenue constante en réalisant les étapes suivantes :

   on commande la fermeture des interrupteurs haut et bas de la phase intermédiaire du hacheur série (2),
   si la tension de seuil en sortie du hacheur série (2) est inférieure à la tension de la phase basse, on commande le hachage de l'interrupteur haut de la phase basse avec un premier rapport cyclique,
   sinon, on ferme l'interrupteur haut de la phase basse et on commande le hachage de l'interrupteur bas de la phase haute avec un deuxième rapport cyclique.

2. Procédé selon la revendication précédente, dans lequel la consigne de courant en sortie du hacheur série (2) est toujours supérieure aux courants provenant du réseau d'alimentation triphasé et au courant de batterie.

## Patentansprüche

1. Verfahren zur Steuerung eines Batterieladegeräts für ein Kraftfahrzeug, wobei das Batterieladegerät ein Eingangsfilter (1) umfasst, das eine Drehstromversorgungsschaltung mit einem Serien-Zerhacker (2) verbindet, wobei eine Boost-Schaltung (3) einerseits mit dem Serien-Zerhacker (2) und andererseits mit der Batterie (BAT) verbunden ist, wobei der Serien-Zerhacker (2) drei Phasen umfasst, eine hohe Phase, deren Spannung die größte der drei Phasen ist, eine niedrige Phase, deren Spannung die schwächste der drei Phasen ist, und eine Zwischenphase, **dadurch gekennzeichnet, dass** es die folgenden Schritte umfasst:

   Es wird die Schwellenwertspannung am Ausgang des Serien-Zerhackers (2) in Abhängigkeit von der Differenz zwischen einem Batteriestrommesswert und einer Batteriestromanforderung bestimmt,
   die Spannung am Ausgang des Serien-Zerhackers (2) wird konstant gehalten, und
   die Schalter der Boost-Stufe (3) werden derart gesteuert, dass sie offen gehalten werden,
   wobei die Spannung am Ausgang des Serien-Zerhackers (2) konstant gehalten wird, indem die folgenden Schritte ausgeführt werden:

Es wird das Schließen des hohen und des niedrigen Schalters der Zwischenphase des Serien-Zerhackers (2) gesteuert,

falls die Schwellenwertspannung am Ausgang des Serien-Zerhackers (2) niedriger als die Spannung der niedrigen Phase ist, wird das Zerhacken des hohen Schalters der niedrigen Phase mit einem ersten Tastverhältnis gesteuert,

andernfalls wird der hohe Schalter der niedrigen Phase geschlossen, und das Zerhacken des niedrigen Schalters der hohen Phase wird mit einem zweiten Tastverhältnis gesteuert.

2. Verfahren nach dem vorhergehenden Anspruch, wobei der Stromsollwert am Ausgang des Serien-Zerhackers (2) stets höher als die Ströme, die vom Drehstromversorgungsnetz stammen, und als der Batteriestrom ist.


**Claims**

1. Method for controlling a battery charger for a motor vehicle, the battery charger comprising an input filter (1) connecting a three-phase power supply circuit to a series chopper (2), a boost circuit (3) being connected on the one hand to the series chopper (2), and on the other hand to the battery (BAT), the series chopper (2) comprising three phases, namely a high phase whose voltage is the greatest of the three phases, a low phase whose voltage is the smallest of the three phases, and an intermediate phase, **characterized in that** it comprises the following steps:

the threshold voltage at the output of the series chopper (2) is determined on the basis of the difference between a battery current measurement and a battery current request,
the output voltage of the series chopper (2) is kept constant, and
the switches of the boost stage (3) are controlled in such a way that they are kept open,
the output voltage of the series chopper (2) being kept constant by executing the following steps:

the high and low switches of the intermediate phase of the series chopper (2) are controlled so as to close,
if the threshold voltage at the output of the series chopper (2) is lower than the voltage of the low phase, the chopping of the high switch of the low phase is controlled so as to take place with a first duty cycle;
otherwise, the high switch of the low phase is closed and the chopping of the low switch of the high phase is controlled so as to take place with a second duty cycle.

2. Method according to the preceding claim, wherein the current setpoint at the output of the series chopper (2) is always greater than the currents received from the three-phase power supply network and greater than the battery current.

FIG.1

## FIG.2

## FIG.3

## FIG.4

# FIG.1

EP 2 865 070 B1

## RÉFÉRENCES CITÉES DANS LA DESCRIPTION

**Documents brevets cités dans la description**

- FR 2964510
- FR 2943188
- US 2006209574 A
- WO 2011115330 A